# EUROPEAN PATENT APPLICATION

(11) **EP 0 531 917 A1**
(43) Date of publication of application: **17.03.1993**
(21) Application number: 92115261.7
(22) Date of filing: 07.09.1992
(51) Int. Cl.: D06F 37/20, F16F 7/08

(54) **Washing machine, washing-drying machine or the like comprising magnetic dampers**

(30) Priority: 12.09.1991 IT MI912416
(71) Applicant: WHIRLPOOL EUROPE B.V., NL-5507 SK Veldhoven (NL)
(72) Inventor: Galli, Rocco, c/o Whirlpool Italia s.r.l., I-21025 Comerio (VA) (IT); Franzetti, Giovanni, c/o Whirlpool Italia s.r.l., I-21025 Comerio (VA) (IT)
(74) Representative: Melio, Jan Dirk

(57) **Abstract**

A washing machine, washing-drying machine or the like (1) of the type comprising a cabinet (2) containing a tub (3) within which there rotates a drum (4) driven in known manner by a usual electric motor (5), said tub (3) and said drum (4), together with the usual counterweight and balancing members relating to said tub (3), forming a floating unit elastically secured to said cabinet (2) in known manner.

At least one electromagnetically controlled damper (20) is associated with said floating unit.

## Description

This invention relates to a damper device for use in a washing machine, washing-drying machine or the like of the type comprising a cabinet containing a tub within which there rotates a drum driven in known manner by an electric motor, said tub and said drum, together with the usual counterweight and balancing members relating to said tub, forming a floating unit elastically secured to said cabinet and associated with at least one damper comprising a member rigid with the tub and projecting from it and interposed between braking means secured to the cabinet. The purpose of the damper is to absorb the oscillations generated within said unit, said oscillations being of variable amplitude depending on the rotational speed of the drum and on the extent of unbalance of the load placed in the drum (this unbalance being due for example to non-uniform distribution of the clothes within the drum).

Specifically, during the beginning and end of spinning, critical (spinning) speeds are attained at which the oscillations of the floating unit are a maximum. During such times the dampers are required to exert a considerable braking action on the floating unit to damp the oscillations and prevent mechanical damage to the washing machine.

During these times the forces transmitted by the floating unit to the cabinet are also a maximum.

Although known dampers (this term signifying any damper device or member used for the aforesaid purpose) reduce the oscillations of the floating unit, they do not limit the forces transferred from the unit to the cabinet. These forces are the source of the vibration and noise generated in the cabinet.

In addition, such vibration can cause obvious problems to the usual mechanical parts of the washing machine associated with the cabinet.

An object of the present invention is to provide a damper device for use in washing machines or the like to limit the stresses transferred from their floating unit to the respective cabinet.

A particular object of the invention is to provide a damper which reduces the forces transferred from the floating unit of a washing machine to the cabinet of this latter during the initial period and final period of the spinning stage.

A further object is to provide a damper device which is of simple construction, low cost and reliable use.

A further object is to provide a damper device which can be controlled to operated at different moments, even distant apart in time, during the use of the washing machine or the like on which the device is mounted.

These and further objects which will be apparent to the expert of the art are attained by a device of the stated type for use in a washing machine or the like of the aforesaid type, the inventive characteristics of which are expressed by the accompanying claims. The present invention will be more apparent from the accompanying drawing, which is provided by way of non-limiting example and in which:
Figure 1 is a schematic perspective view of a washing machine according to the invention;
Figure 2 is a perspective view of a first embodiment of the device according to the invention;
Figure 3 is a schematic side view of the device of Figure 2;
Figure 4 is a side view of a second embodiment of the invention.

With reference to the figures, a washing machine (or washing-drying machine or the like) is indicated overall by 1 and comprises a cabinet 2 containing a tub 3 in which a drum 4 rotates. The drum is driven by an electric motor 5 in known manner, for example via a belt 6 and drive pulley 7 and driven pulley 8 associated with said drum.

The operation of the washing machine is controlled by a known timer 10 connected to usual knobs 11 and pushbuttons 12 located on the front 13 of the cabinet 2, where there is also an aperture 14 provided with its own closure door 15. On the front 13 there is also a usual tray 16 for the detergent.

The tub 3 is also associated with usual elastic and balancing members (which secure it to the cabinet 2), not shown, which together with the tub and drum 4 define a floating unit. According to the invention, at least one magnetic damper device 20 secured to the cabinet 2 is associated with the tub 3.

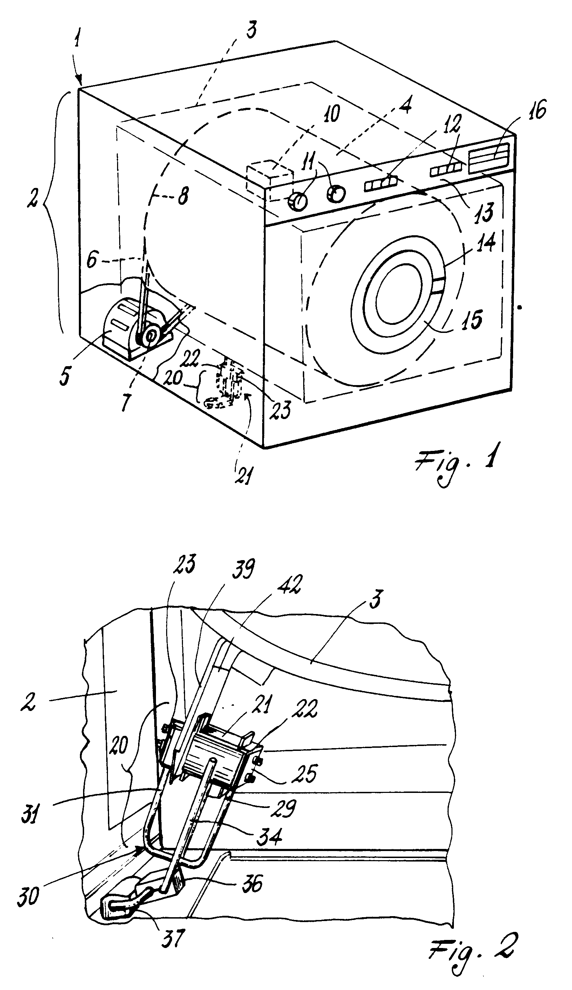

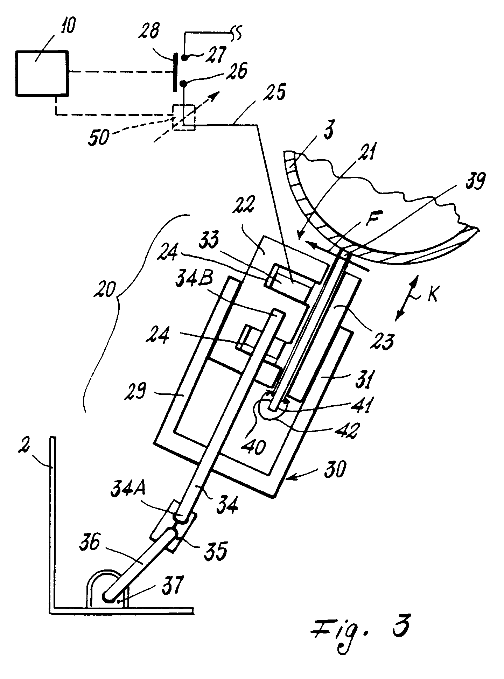

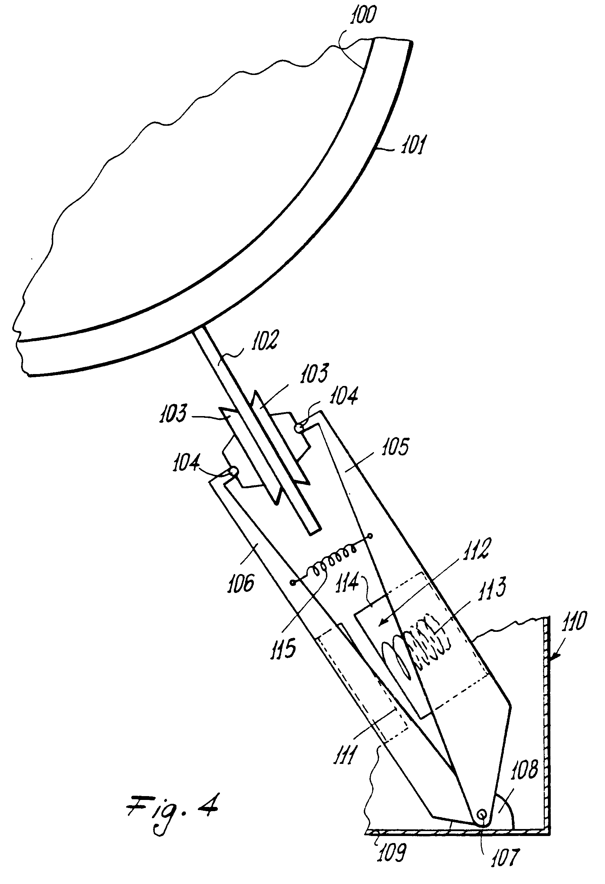

The device 20 of Figures 1, 2 and 3 comprises a ferromagnetic core 21 with a fixed part 22 and a movable part or armature 23. The fixed part comprises an annular recess 24 holding one or more windings or turns 33 through which current can pass, fed via a feed line 25. The line 25 comprises contacts 26 and 27 to be closed by a movable contactor 28 controlled by the timer 10.

This construction gives the fixed part 22 the characteristics of an electromagnet.

This fixed part or electromagnet 22 is connected to an arm 29 of a substantially U-shaped piece 30. The armature 23 is connected to the other arm 31 of the U-piece 30. The U-piece has intrinsic elasticity and can deform to allow its arms to approach each other.

A further U-piece 34 has its two arms rigid with the fixed part 22 at 34B. The U-piece 34 is fixed at one end 34A, via a usual hinge 35, to an annular element 36 fixed to the cabinet 2 via a usual fixing block 37 advantageously formed of elastic material able to absorb stresses and noise (such as rubber).

The electromagnet 22 and armature 23 are arranged to act, when activated, as braking members by acting on a blade-like projecting member 39 rigid with the tub 3. The member 39 projects orthogonally from the tub and on its two opposing sides 40, 41 comprises coatings 42 of self-lubricating material to prevent metal-to-metal contact between the member itself, the electromagnet and the armature.

It will now be assumed that the machine 1 is operating.

When the timer 10 starts the spinning stage in known manner (ie it acts on the motor 5 such that this rotates the drum 4 at a predetermined spinning speed), the timer closes the movable contactor 28 across the contacts 26 and 27 in any known manner.

This can be achieved for example by a supplementary cam provided on said timer or by the actual (known) means which start the spinning stage.

With the closure of the contacts 26 and 27, the electromagnet 22 is energized to attract the armature 23 to it (arrow F, Figure 3).

This attraction is opposed by the action of the elastic U-piece 30, the arms 29 and 31 of which elastically oppose the approach movement of the armature 23 to the electromagnet 22.

This movement results in substantial clamping of the member 39 and the shoe coatings 42 carried by it. During said spinning stage the tub oscillates within the cabinet 2 and moves in the direction of the arrow K of Figure 3, and as this movement drags the member 39 (again in the direction of the arrow K), the closure of the armature 23 against the electromagnet 22 brakes the movement of the member 39.

In other words, the clamping of the member 39 between the parts 22 and 23 does not totally block its movement, but considerably limits its motion. The member 39 is hence braked and the oscillations of the tub 3 and generally the entire floating unit of the washing machine 1 are damped. This results in considerable limitation of the forces transferred from this latter to the cabinet 2.

Vice versa, the forces supported by the core 21 are transferred to the member 37, which retransfers them to only a very limited extent to the cabinet 2. This is precisely because of the form of construction of said member 37.

On termination of the spinning stage, the timer 10 separates the contactor 28 from the contacts 26 and 27, and cuts the power to the electromagnet 22.

It should be noted that the clamping force of the member 39 can be varied (for example on the basis of the spinning speed) by varying the intensity of the current passing through the turns 33, for example by a potentiometer 50 connected into the line 25 and controlled by the timer or another known control unit.

In addition, the presence of the hinge 35 enables the damper device to be positioned correctly between the cabinet 2 and the tub 3, so compensating the relative movements between them. One particular embodiment of the invention has been described. However, other embodiments are possible.

In one of these, the timer 10 closes the contactor 28 against the contacts 26 and 27 only during the starting and finishing periods of the spinning stage. This can be achieved for example by providing supplementary cams in the timer to act on the contactor 28 during said periods.

Following the opening of the contactor 28, the elastic arm 31 of the U-piece 30 at least partly withdraws the armature 23 from the electromagnet 22 to release the member 39, which can then move freely.

The purpose of this embodiment is to increase the degree of anchoring of the tub 3 to the cabinet 2 at those moments (beginning and end of spinning) in which the stresses transmitted by the tub to the cabinet are at their highest intensity, ie when the amplitude of the tub oscillations is greatest, on exceeding a particular speed (critical speed).

When the member 39 is not under braked conditions, all stresses deriving from the tub 3 are absorbed by the elastic members which, as stated, secure the tub to the cabinet 2 in known manner. In the embodiment of Figure 4, the reference numeral 100 indicates the drum and 101 the tub containing it. A radially projecting metal blade 102 is connected to the tub.

This blade extends between two shoes 103 of friction material hinged at 104 to the ends of two levers 105, 106 hinged lowerly at 107 to an antivibration elastic support 108 fixed to the floor 109 of the washing machine cabinet.

A spring 115 moves the two levers 105, 106 away.

An electromagnet has its armature 111 fixed to the lever 106 and its inductor 112 rigid with the other lever 105.

The inductor comprises a usual energization winding 113 and the primary magnetic circuit 114.

On energizing the electromagnet, the two levers 105, 106 tend to approach in opposition to the spring 115 and apply the shoes against the blade 102 to brake the movements impressed on it by the tub 101, with a greater or lesser braking force depending on the intensity of the current passing through the electromagnet.

The described device considerably limits the stresses transferred from the tub to the cabinet of the washing machine (or the like), and prevents the full extent of the oscillations generated at least at the beginning and end of the drum spinning stage (at which those rotational speeds critical for the mechanical stability of said machine and its parts are exceeded) from being transferred from said tub to the cabinet.

## Claims

1. A damper device in a washing machine, washing-drying machine or the like of the type comprising a cabinet containing a tub within which there rotates a drum driven in known manner by a usual electric motor, said tub and said drum, together with the usual counterweight and balancing members relating to said tub, forming a floating unit elastically secured to said cabinet in known manner and associated with at least one damper comprising a member rigid with the tub and projecting from it and interposed between braking means secured to the cabinet, characterised in that the braking means are controlled by an electromagnet.

2. A device as claimed in claim 1, characterised in that the braking means are in the form of a caliper comprising two levers hinged to the machine, one carrying the armature of the electromagnet and the other carrying the inductor winding.

3. A device as claimed in claim 2, characterised in that a counteracting spring is provided between the levers.

4. A device as claimed in claim 2, characterised in that the braking means comprise friction pads hinged to the top of the levers.

5. A device as claimed in claim 2, characterised in that the two levers are hinged at a common point.

6. A device as claimed in claim 1, characterised in that the braking means comprise at least one elastic U-piece with one arm rigid with the inductor and the other arm rigid with the armature of the electromagnet, the inductor being mounted on a further U-piece which connects it to the cabinet by a hinged connection.

7. A device as claimed in one or more of the preceding claims, characterised in that the electrical feed line (25) to the inductor can be interrupted by opening a static or non-static contactor controlled by the machine programme.

8. A device as claimed in claim 7, characterised in that a dissipator member (50) such as a potentiometer is provided in the feed line.

9. A device as claimed in claim 8, characterised in that the dissipator member (50) is controlled by the timer (10) or another intelligent control unit of known type.
